# FASCICULE DE BREVET EUROPEEN

(11) **EP 3 083 272 B1**
(45) Date de publication et mention de la délivrance du brevet: **11.07.2018**
(21) Numéro de dépôt: 14814808.3
(22) Date de dépôt: 11.12.2014
(51) Int. Cl.: B60C 1/00, B60C 11/00, C08L 9/06, C08L 67/02, C08L 67/03

(54) **PNEUMATIQUE DONT LA ZONE SOMMET EST POURVUE D'UNE SOUS-COUCHE COMPORTANT UN ELASTOMERE THERMOPLASTIQUE COPOLYMERE A BLOC POLYESTER AROMATIQUE**
REIFEN MIT EINER KRONENREGION MIT EINER TEILSCHICHT MIT EINEM COPOLYMER-THERMOPLASTISCHEN ELASTOMER MIT EINEM AROMATISCHEN POLYESTERBLOCK
TYRE THE CROWN REGION OF WHICH IS PROVIDED WITH A SUB-LAYER COMPRISING A COPOLYMER THERMOPLASTIC ELASTOMER COMPRISING AN AROMATIC POLYESTER BLOCK

(30) Priorité: 17.12.2013 FR 1362811
(43) Date de publication de la demande: 26.10.2016
(73) Titulaire: Compagnie Générale des Etablissements Michelin, 63000 Clermont-Ferrand (FR)
(72) Inventeur: ABAD, Vincent, F-63040 Clermont-Ferrand Cedex 9 (FR)
(74) Mandataire: Sidhu, Alban
(86) Numéro de dépôt international: PCT/EP2014/077326
(87) Numéro de publication internationale: WO 2015/091186

(56) Documents cités:
- WO-A1-2011/141466
- WO-A1-2012/152688
- WO-A1-2013/011111
- FR-A1- 2 988 644

## Description

La présente invention est relative aux couches d'élastomères utilisées dans le sommet (« *crown* ») des pneumatiques et aux compositions à base d'élastomères thermoplastiques (TPE), utilisées pour la fabrication de tels pneumatiques.

Un objectif constant des manufacturiers de pneumatique est d'augmenter la rigidité de dérive des pneumatiques, notamment par l'incorporation d'une sous-couche de forte rigidité sous la bande de roulement. La rigidité de cette sous-couche permet de manière connue d'améliorer le comportement routier (« *handling* ») des pneumatiques.

Dans ce but, la demanderesse a trouvé de manière surprenante qu'un pneumatique pourvu d'une sous-couche spécifique permettait d'obtenir une rigidité de dérive augmentée.

L'invention a pour objet un pneumatique radial pour véhicule automobile, comportant :
∘ un sommet comportant une bande de roulement pourvue d'au moins une partie radialement externe destinée à entrer au contact de la route ;
∘ deux bourrelets inextensibles, deux flancs reliant les bourrelets à la bande de roulement, une armature de carcasse passant dans les deux flancs et ancrée dans les bourrelets ;
∘ une armature de sommet ou ceinture disposée circonférentiellement entre la partie radialement externe de la bande de roulement et l'armature de carcasse ;
∘ une couche élastomère radialement interne dite « sous-couche », de formulation différente de la formulation de la partie radialement externe de la bande de roulement, cette sous-couche étant elle-même disposée circonférentiellement entre la partie radialement externe de la bande de roulement et l'armature de carcasse,
dans lequel ladite sous-couche comprend au moins un élastomère thermoplastique copolymère à bloc polyester aromatique (CBPA) à un taux compris dans un domaine variant de 65 à 100 pce (parties en poids pour cent parties d'élastomère).

La composition de cette sous-couche permet d'obtenir une rigidité de dérive augmentée. Par ailleurs, il est difficile d'atteindre cet objectif sans pénaliser trop fortement la résistance au roulement puisque une augmentation de rigidité s'accompagne en général d'une augmentation de l'hystérèse, et inversement, la diminution de l'hystérèse suppose bien souvent une perte en rigidité. Les compositions de sous-couche des pneumatiques selon l'invention permettent d'augmenter la rigidité de dérive sans augmentation notable de l'hystérèse.

De préférence, l'invention concerne un pneumatique tel que défini ci-dessus, dans lequel le bloc élastomérique de l'élastomère thermoplastique copolymère à bloc polyester aromatique (CBPA) est choisi dans le groupe constitué par les polyéthers, les polyesters aliphatiques, les polycarbonates et les mélanges de ces derniers ; plus préférentiellement dans le groupe constitué par les copolymères de polyester aromatique et de polyéther et les mélanges de ces derniers ; et encore plus préférentiellement dans le groupe constitué par les copolymères de polyester aromatique et de polyéther aliphatique et les mélanges de ces derniers.

De préférence également, l'invention concerne un pneumatique tel que défini ci-dessus, dans lequel la masse moléculaire moyenne en nombre du CBPA est préférentiellement comprise entre 15 000 et 500 000 g/mol.

Préférentiellement encore, l'invention concerne un pneumatique tel que défini ci-dessus, dans lequel l'élastomère thermoplastique copolymère à bloc polyester aromatique (CBPA) présente une température de transition vitreuse ("Tg") qui est inférieure ou égale à 25°C, plus préférentiellement inférieure ou égale à 10°C.

Plus préférentiellement, l'invention concerne un pneumatique tel que défini ci-dessus, dans lequel la température de fusion (Tf) du copolymère CBPA est comprise entre 140°C et 210°C.

De manière préférentielle, l'invention concerne un pneumatique tel que défini ci-dessus, dans lequel le taux de copolymère CBPA dans la sous-couche est compris dans un domaine allant de 70 à 100 pce, de préférence de 75 à 100 pce, plus préférentiellement de 95 à 100 pce.

De préférence, l'invention concerne un pneumatique tel que défini ci-dessus, dans lequel la sous-couche comprend en outre un élastomère différent d'un élastomère CBPA à un taux d'au plus 35 pce, de préférence d'au plus 30 pce, plus préférentiellement d'au plus 25 pce et plus préférentiellement encore d'au plus 5 pce.

Très préférentiellement, l'invention concerne un pneumatique tel que défini ci-dessus, dans lequel l'élastomère CBPA est le seul élastomère de la sous-couche.

L'invention concerne plus particulièrement les pneumatiques destinés à équiper des véhicules sans moteur tels que les bicyclettes, ou des véhicules à moteur de type tourisme, SUV ("Sport Utility Vehicles"), deux roues (notamment motos), avions, comme des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, autres véhicules de transport ou de manutention.

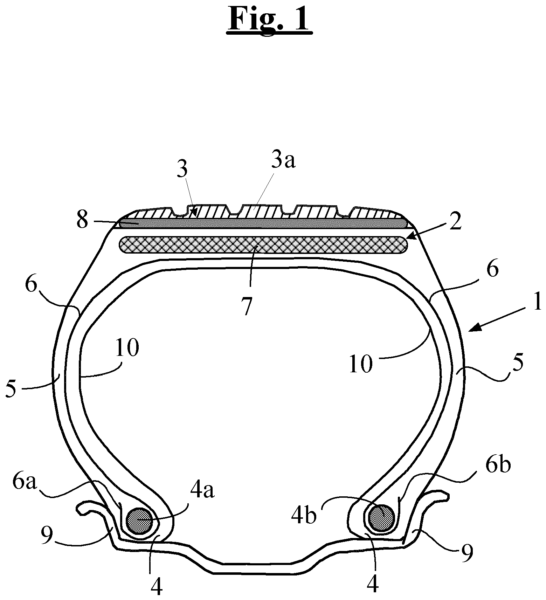

L'invention ainsi que ses avantages seront aisément compris à la lumière de la description et des exemples de réalisation qui suivent, ainsi que des figures 1 à 2 relatives à ces exemples qui schématisent, en coupe radiale, des exemples de pneumatiques radiaux conformes à l'invention.

### DESCRIPTION DETAILLEE DE L'INVENTION

Dans la présente description, sauf indication expresse différente, tous les pourcentages (%) indiqués sont des pourcentages en masse.

Au sens de la présente invention, la sous-couche est disposée circonférentiellement à l'intérieur du sommet du pneumatique, entre d'une part la partie la plus radialement externe de sa bande de roulement, c'est-à-dire la portion destinée à entrer au contact de la route lors du roulage, et d'autre part l'armature de sommet. Par sous-couche, on entend donc toute partie en caoutchouc radialement extérieure à l'armature de sommet du pneumatique qui ne donne pas sur l'extérieur du bandage pneumatique, qui est sans contact avec l'air ou un gaz de gonflage, en d'autres termes qui est donc située à l'intérieur même de la bande de roulement ou entre cette dernière et la ceinture (ou armature de sommet) du pneumatique.

Il faut donc comprendre que cette sous-couche peut être disposée:
- soit dans la bande de roulement elle-même, mais dans ce cas radialement sous la portion sculptée (c'est-à-dire radialement intérieurement par rapport à cette portion) de bande de roulement qui est destinée à entrer au contact de la route lors du roulage du pneumatique, tout au long de la durée de vie de ce dernier ;
- soit sous la bande de roulement (c'est-à-dire radialement intérieurement par rapport à cette bande de roulement), entre la bande de roulement et la ceinture (ou armature de sommet).

Préférentiellement, cette sous-couche est l'unique couche se situant entre la bande de roulement et l'armature de sommet, ou bien se situant à l'intérieur de la bande de roulement.

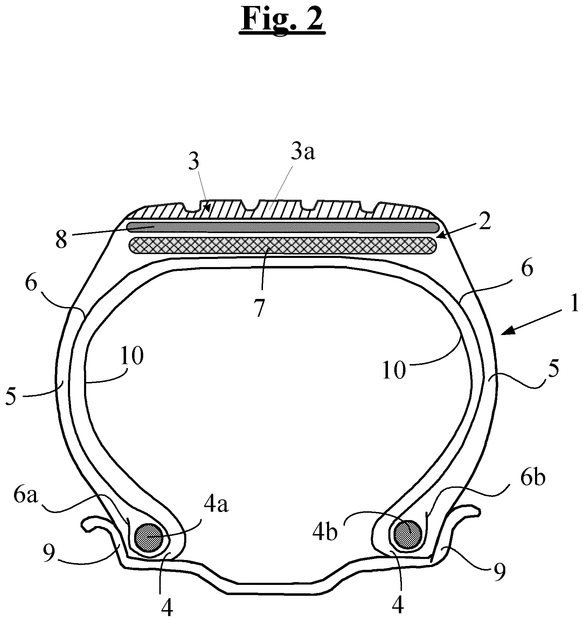

Les figures 1 et 2 annexées représentent en coupe radiale, de manière très schématique (notamment sans respect d'une échelle spécifique), deux exemples préférentiels de bandages pneumatiques pour véhicule automobile à armature de carcasse radiale, conformes à l'invention.

La figure 1 illustre un premier mode possible de réalisation de l'invention, selon lequel la sous-couche (8) est intégrée à la bande de roulement (3) elle-même, mais disposée sous la portion (3a) de la bande de roulement qui est destinée à entrer au contact de la route lors du roulage, pour constituer ce que l'on a coutume d'appeler une sous-couche d'une bande de roulement. On peut rappeler aussi que, dans un tel cas, la bande de roulement est aussi communément appelée par l'homme du métier bande de roulement à structure "*cap-base*", le terme "*cap*" désignant la portion sculptée de la bande de roulement destinée à entrer au contact de la route et le terme *"base"* désignant la portion non sculptée de la bande de roulement, de formulation différente, qui n'est quant à elle pas destinée à entrer au contact de la route.

Sur cette figure 1, le bandage pneumatique (1) schématisé comporte un sommet (2) comportant une bande de roulement (3) (pour simplifier, comportant une sculpture très simple) dont la partie radialement externe (3a) est destinée à entrer au contact de la route, deux bourrelets inextensibles (4) dans lesquels est ancrée une armature de carcasse (6). Le sommet (2), réuni auxdits bourrelets (4) par deux flancs (5), est de manière connue en soi renforcé par une armature de sommet ou "ceinture" (7) au moins en partie métallique et radialement externe par rapport à l'armature de carcasse (6).

Plus précisément, une ceinture de pneumatique est généralement constituée d'au moins deux nappes de ceinture superposées, dites parfois nappes "de travail" ou nappes "croisées", dont les éléments de renforcement ou "renforts" sont disposés pratiquement parallèles les uns aux autres à l'intérieur d'une nappe, mais croisés d'une nappe à l'autre, c'est-à-dire inclinés, symétriquement ou non, par rapport au plan circonférentiel médian, d'un angle qui est généralement compris entre 10° et 45° selon le type de pneumatique considéré. Chacune de ces deux nappes croisées est constituée d'une matrice de caoutchouc ou "gomme de calandrage" enrobant les renforts. Dans la ceinture, les nappes croisées peuvent être complétées par diverses autres nappes ou couches de caoutchouc auxiliaires, de largeurs variables selon les cas, comportant ou non des renforts ; on citera à titre d'exemple de simples coussins de gomme, des nappes dites "de protection" chargées de protéger le reste de la ceinture des agressions externes, des perforations, ou encore des nappes dites "de frettage" comportant des renforts orientés sensiblement selon la direction circonférentielle (nappes dites "à zéro degré"), qu'elles soient radialement externes ou internes par rapport aux nappes croisées.

Pour le renforcement des ceintures ci-dessus, en particulier de leurs nappes croisées, nappes de protection ou nappes de frettage, on utilise généralement des renforts sous forme de câbles d'acier ("*steel cords")* ou des câblés textiles ("*textile cords*") constitués de fils fins assemblés entre eux par câblage ou retordage.

L'armature de carcasse (6) est ici ancrée dans chaque bourrelet (4) par enroulement autour de deux tringles (4a, 4b), le retournement (6a, 6b) de cette armature (6) étant par exemple disposé vers l'extérieur du pneumatique (1) qui est ici représenté monté sur sa jante (9). L'armature de carcasse (6) est constituée d'au moins une nappe renforcée par des câbles textiles radiaux, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 7). Bien entendu, ce pneumatique (1) comporte en outre de manière connue une couche (10) de gomme ou élastomère intérieure (communément appelée " gomme intérieure " ou "*inner liner*") qui définit la face radialement interne du pneumatique et qui est destinée à protéger la nappe de carcasse de la diffusion d'air provenant de l'espace intérieur au pneumatique.

Cet exemple de pneumatique (1) conforme à l'invention de la figure 1 est caractérisé en ce que la partie base (8) de sa bande de roulement (3) est constituée par la sous-couche qui est décrite en détail dans ce qui suit.

La figure 2 illustre un autre mode possible de réalisation de l'invention, selon lequel la sous-couche (8) est externe à la bande de roulement (i.e., distincte de cette dernière), disposée cette fois, toujours dans le sommet (2), en dessous de la bande de roulement (i.e., radialement intérieurement par rapport à cette dernière) et au-dessus de la ceinture (i.e., radialement extérieurement par rapport à cette dernière), en d'autres termes entre la bande de roulement (3) et la ceinture (7).

Dans tous les cas schématisés par les figures commentées ci-dessus, la sous-couche, grâce à ses propriétés de rigidité de dérive améliorée, est susceptible de contribuer à un meilleur comportement (« *handling* ») des véhicules munis de tels pneumatiques.

Cette sous-couche a préférentiellement une épaisseur comprise entre 0,2 et 3 mm, plus préférentiellement comprise entre 0,5 et 2,5 mm, et encore plus préférentiellement comprise entre 1 et 2,5 mm.

Par ailleurs, le terme « pce » (en anglais « phr ») signifie au sens de la présente demande de brevet, partie en poids pour cent parties d'élastomère, thermoplastiques et non thermoplastiques confondus. Au sens de la présente invention, les élastomères thermoplastiques (TPE) font partie des élastomères.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

### 1. Composition de la sous-couche

Le pneumatique selon l'invention a pour caractéristique essentielle d'être pourvu d'une couche élastomère dite « sous-couche » de formulation différente de la portion externe, sculptée, de la bande de roulement, ladite sous-couche comprenant au moins un élastomère thermoplastique copolymère à bloc polyester aromatique (CBPA) à un taux compris dans un domaine variant de 65 à 100 pce (parties en poids pour cent parties d'élastomère).

### 1.1. Elastomère thermoplastique copolymère à bloc polyester aromatique

L'élastomère thermoplastique utilisé dans la sous-couche de l'invention est un copolymère à blocs dont les blocs thermoplastiques sont des polyesters aromatiques, le bloc élastomérique pouvant varier. Par convention, cet élastomère thermoplastique (TPE) copolymère à bloc polyester aromatique est abrégé CBPA dans la présente demande.

Les élastomères thermoplastiques (en abrégé « TPE ») ont une structure intermédiaire entre polymères thermoplastiques et élastomères. Ce sont des copolymères à blocs, constitués de blocs rigides, thermoplastiques, reliés par des blocs souples, élastomères.

La masse moléculaire moyenne en nombre (notée Mn) du CBPA est préférentiellement comprise entre 15 000 et 500 000 g/mol, plus préférentiellement comprise entre 20 000 et 300 000 g/mol. En dessous des minima indiqués, la cohésion entre les chaînes d'élastomère du CBPA, notamment en raison de sa dilution éventuelle (en présence d'une huile d'extension), risque d'être affectée ; d'autre part, une augmentation de la température d'usage risque d'affecter les propriétés mécaniques, notamment les propriétés à la rupture, avec pour conséquence une performance diminuée "à chaud". Par ailleurs, une masse Mn trop élevée peut être pénalisante pour la mise en oeuvre. Ainsi, on a constaté qu'une valeur comprise dans un domaine de 20 000 à 50 000 g/mol était particulièrement bien adaptée, notamment à une utilisation du CBPA dans une composition de sous-couche de pneumatique.

La masse moléculaire moyenne en nombre (Mn) du CBPA est déterminée par toute technique connue de l'homme de l'art et notamment, de manière connue, par chromatographie d'exclusion stérique (SEC). L'échantillon est préalablement solubilisé dans un solvant adapté à une concentration d'environ 2 g/l ; puis la solution est filtrée sur filtre de porosité 0,45 µm avant injection. L'appareillage utilisé est une chaîne chromatographique « WATERS alliance ». Par exemple dans le cas des CBPA de type COPE, le solvant d'élution est l'hexafluoroisopranol avec du sel de trifluoroactétate de sodium à une concentration de 0.02 M, le débit de 0,5 ml/min, la température du système de 35°C et la durée d'analyse de 90 min. On utilise un jeu de trois colonnes PHENOMENEX en série, de dénominations commerciales « PHENOGEL » (tailles de pores : 10^5, 10^4, 10^3 A). Le volume injecté de la solution de l'échantillon de polymère est de 100 µl. Le détecteur est un réfractomètre différentiel « WATERS 2410 » et son logiciel associé d'exploitation des données chromatographiques est le système « EMPOWER ». Les masses molaires moyennes calculées sont relatives à une courbe d'étalonnage réalisée avec des étalons de PMMA (polyméthacrylate de méthyle). Les conditions sont adaptables par l'homme du métier.

La valeur de l'indice de polydispersité Ip (rappel : Ip = Mw/Mn avec Mw masse moléculaire moyenne en poids et Mn masse moléculaire moyenne en nombre) du TPE est de préférence inférieure à 3 ; plus préférentiellement inférieure à 2 et encore plus préférentiellement inférieure à 1,5.

Dans la présente demande, lorsqu'il est fait référence à la température de transition vitreuse du CBPA, il s'agit de la Tg relative au bloc élastomère. Le CBPA présente préférentiellement une température de transition vitreuse ("Tg") qui est préférentiellement inférieure ou égale à 25°C, plus préférentiellement inférieure ou égale à 10°C. Une valeur de Tg supérieure à ces minima peut diminuer les performances de la sous-couche lors d'une utilisation à très basse température ; pour une telle utilisation, la Tg du TPE est plus préférentiellement encore inférieure ou égale à -10°C. De manière préférentielle également, la Tg du CBPA est supérieure à -100°C.

De manière connue, les CBPA présentent deux pics de température de transition vitreuse (Tg, mesurée selon ASTM D3418), la température la plus basse, étant relative à la partie élastomère du CBPA, la température la plus haute, étant relative à la partie thermoplastique du CBPA c'est-à-dire au bloc de polyester aromatique. Ainsi, les blocs souples des CBPA se définissent par une Tg inférieure à la température ambiante (25°C), tandis que les blocs rigides de polyester aromatique ont une Tg supérieure à 60°C.

Les CBPA présentent, par leur blocs thermoplastiques une température de fusion (Tf) (mesurée par DSC) supérieure à 120°C. De préférence pour les besoins de l'invention, on préfèrera pour la couche CBPA les élastomères thermoplastiques CBPA dont la Tf est comprise entre 140°C et 210°C.

Les CBPA sont des copolymères comprenant un grand nombre de blocs (plus de 30, typiquement de 50 à 500), ces blocs ayant de préférence des masses peu élevées, par exemple de 500 à 5000 g/mol, ces CBPA sont appelés multiblocs et sont un enchaînement bloc élastomère - bloc thermoplastique qui se répète.

Par élastomères thermoplastique copolymères à bloc polyester aromatique (CBPA) on entend élastomère thermoplastique copolymère à bloc dans lequel les blocs rigides sont essentiellement (c'est-à-dire à plus de 80% en poids, de préférence à plus de 90% en poids et plus préférentiellement à plus de 99% en poids) constitués de polyester aromatique (c'est-à-dire un ou plusieurs polyester(s) aromatique(s)).

De manière préférentielle, le bloc élastomérique des CBPA est choisi dans le groupe constitué par les polyéthers, les polyesters aliphatiques, les polycarbonates et les mélanges de ces derniers.

De manière encore plus préférentielle, le bloc élastomérique des CBPA est choisi dans le groupe constitué par les polyéthers et leurs mélanges, et plus préférentiellement encore dans le groupe des polyéthers aliphatiques et leurs mélanges.

Dans ces cas où le CBPA est un copolymère à bloc polyester aromatique et polyéther, il appartient alors à la famille des copolymères à bloc polyester et polyéther (en abrégé « COPE »).

On peut par exemple citer les COPE commercialisés par la société TOYOBO tels que les « COPE P30B », « COPE P40B », « COPE P40H » ou « COPE P55B ». On peut citer également le TPE COPE commercialisé par la société DSM sous la dénomination « Arnitel », ou par la société Dupont sous la dénomination « Hytrel », ou par la société Ticona sous le dénomination « Riteflex ».

Si d'éventuels autres élastomères (non CBPA) sont utilisés dans la composition, le ou les élastomères CBPA constituent la fraction majoritaire en poids ; ils représentent alors au moins 65%, de préférence au moins 70% en poids, plus préférentiellement au moins 75% en poids de l'ensemble des élastomères présents dans la composition élastomère. De manière préférentielle également, le ou les élastomères CBPA représentent au moins 95% (en particulier 100%) en poids de l'ensemble des élastomères présents dans la composition élastomère.

Ainsi, la quantité totale d'élastomère CBPA est comprise dans un domaine qui varie de 65 à 100 pce, préférentiellement de 70 à 100 pce et notamment de 75 à 100 pce. De manière préférentielle également, la composition contient de 95 à 100 pce d'élastomère CBPA. Le ou les élastomères CBPA sont préférentiellement le ou les seuls élastomères de la sous-couche.

### 1.2 Autres élastomères optionnels

Le ou les élastomères CBPA décrits précédemment sont suffisants à eux seuls pour que soit utilisable la sous-couche selon l'invention.

La composition de la sous-couche selon l'invention, peut comporter au moins un (c'est-à-dire un ou plusieurs) autres élastomères à titre d'élastomère non CBPA, cet autre élastomère pouvant être utilisé seul, ou en coupage avec au moins un (c'est-à-dire un ou plusieurs) autre élastomère non CBPA.

Le taux total d'élastomère non CBPA, optionnel, est compris dans un domaine variant de 0 à 35 pce, préférentiellement de 0 à 30 pce, plus préférentiellement de 0 à 25 pce, et plus préférentiellement encore de 0 à 5 pce. De manière préférentielle également, la sous-couche du pneumatique selon l'invention ne contient pas d'élastomère non thermoplastique.

Le ou les autres élastomères optionnels peuvent être choisis parmi les élastomères thermoplastiques différents de l'élastomère CBPA, les élastomères diéniques, ou les mélanges de ces derniers.

Par élastomère thermoplastique (en abrégé « TPE »), doit être compris de manière connue de l'homme de l'art, les élastomères qui ont une structure intermédiaire entre polymères thermoplastiques et élastomères. Il s'agit de copolymères blocs comportant des blocs souples et des blocs rigides, tels qu'ils sont décrits par exemple dans le document WO 2012/152688.

Par élastomère ou caoutchouc « diénique », doit être compris de manière connue un (on entend un ou plusieurs) élastomère issu au moins en partie (i.e. ; un homopolymère ou un copolymère) de monomères diènes (monomères porteurs de deux doubles liaisons carbone carbone, conjuguées ou non).

Ces élastomères diéniques peuvent être classés dans deux catégories : "essentiellement insaturés" ou "essentiellement saturés".

On entend en général par "essentiellement insaturé", un élastomère diénique issu au moins en partie de monomères diènes conjugués, ayant un taux de motifs ou unités d'origine diénique (diènes conjugués) qui est supérieur à 15% (% en mole). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

C'est ainsi que des élastomères diéniques tels que certains caoutchoucs butyl ou les copolymères de diènes et d'alpha oléfines type EPDM peuvent être qualifiés d'élastomères diéniques "essentiellement saturés" (taux de motifs d'origine diénique faible ou très faible, toujours inférieur à 15%).

Ces définitions étant données, on entend plus particulièrement par élastomère diénique, quelque soit la catégorie ci-dessus, susceptible d'être utilisé dans les compositions conformes à l'invention:
(a) tout homopolymère obtenu par polymérisation d'un monomère diène conjugué ayant de 4 à 12 atomes de carbone;
(b) tout copolymère obtenu par copolymérisation d'un ou plusieurs diènes conjugués entre eux ou avec un ou plusieurs composés vinyle aromatique ayant de 8 à 20 atomes de carbone;
(c) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) un copolymère d'isobutène et d'isoprène (caoutchouc diénique butyl), ainsi que les versions halogénées, en particulier chlorées ou bromées, de ce type de copolymère.

Tout type d'élastomère diénique peut être utilisé dans l'invention. Lorsque la composition contient un système de vulcanisation, on utilise de préférence, des élastomères essentiellement insaturés, en particulier des types (a) et (b) ci-dessus, pour la fabrication de la sous-couche du pneumatique selon la présente invention.

A titre de diènes conjugués conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le paratertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent par exemple être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que benzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973). Comme autres exemples d'élastomères fonctionnalisés, on peut citer également des élastomères (tels que SBR, BR, NR ou IR) du type époxydés.

### 1.3. Charge nanométrique ou renforçante

L'élastomère CBPA décrit précédemment est suffisant à lui seul pour que soit utilisable la sous-couche selon l'invention.

Lorsqu'une charge renforçante est utilisée, on peut utiliser tout type de charge habituellement utilisée pour la fabrication de pneumatiques, par exemple une charge organique telle que du noir de carbone, une charge inorganique telle que de la silice, ou encore un coupage de ces deux types de charge, notamment un coupage de noir de carbone et de silice.

Comme noirs de carbone conviennent notamment tous les noirs de carbone conventionnellement utilisés dans les pneumatiques (noirs dits de grade pneumatique). Par exemple, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772), voire même N990.

Par "charge inorganique renforçante", doit être entendu dans la présente demande, par définition, toute charge inorganique ou minérale (quelles que soient sa couleur et son origine (naturelle ou de synthèse), encore appelée charge "blanche", charge "claire" voire "charge non noire" ("non-black filler") par opposition au noir de carbone, capable de renforcer à elle seule, sans autre moyen qu'un agent de couplage intermédiaire, une composition de caoutchouc destinée à la fabrication de pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques renforçantes conviennent notamment des charges minérales du type siliceux, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices "Ultrasil" 7000 et "Ultrasil" 7005 de la société Degussa, les silices "Zeosil" 1165MP, 1135MP et 1115MP de la société Rhodia, la silice "Hi-Sil" EZ150G de la société PPG, les silices "Zeopol" 8715, 8745 et 8755 de la Société Huber, les silices à haute surface spécifique telles que décrites dans la demande WO 03/16837.

Pour coupler la charge inorganique renforçante à l'élastomère, on peut par exemple utiliser de manière connue un agent de couplage (ou agent de liaison) au moins bifonctionnel destiné à assurer une connexion suffisante, de nature chimique et/ou physique, entre la charge inorganique (surface de ses particules) et l'élastomère, en particulier des organosilanes ou des polyorganosiloxanes bifonctionnels.

Le taux volumique de charge renforçante, optionnelle, dans la composition (noir de carbone et/ou charge inorganique renforçante telle que silice) est compris dans un domaine de 0 à 20%, ce qui correspond à un taux de 0 à 50 pce pour une composition sans plastifiant. Préférentiellement la composition comprend moins de 30 pce de charge renforçante et plus préférentiellement moins de 10 pce. Selon une variante préférentielle de l'invention, la composition de la sous-couche ne contient pas de charge renforçante.

### 1.4. Additifs divers

La sous-couche décrite précédemment peut comporter par ailleurs les divers additifs usuellement présents dans les sous-couches connues de l'homme du métier. On choisira par exemple un ou plusieurs additifs choisis parmi les agents de protection tels que antioxydants ou antiozonants, anti-UV, les divers agents de mise en oeuvre ou autres stabilisants, ou encore les promoteurs aptes à favoriser l'adhésion au reste de la structure de l'objet pneumatique. De manière préférentielle, la sous-couche ne contient pas tous ces additifs en même temps et de manière encore plus préférentielle, la sous-couche ne contient aucun de ces agents.

Egalement et à titre optionnel, la composition de la sous-couche de l'invention peut contenir un système de réticulation connu de l'homme du métier. Préférentiellement, la composition ne contient pas de système de réticulation. De la même manière, la composition de la sous-couche de l'invention peut contenir une ou plusieurs charges micrométriques, inertes telles que les charges lamellaires connues de l'homme de l'art. De préférence, la composition de contient pas de charge micrométrique.

Optionnellement également, la composition de la sous-couche de l'invention peut contenir un agent plastifiant, tel qu'une huile d'extension (ou huile plastifiante) ou une résine plastifiante dont la fonction est de faciliter la mise en oeuvre de la sous-couche, particulièrement son intégration au pneumatique par un abaissement du module et une augmentation du pouvoir tackifiant. On peut utiliser toute huile d'extension, apte à étendre, plastifier des élastomères, notamment thermoplastiques. A température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides. On peut également utiliser tout type de résine plastifiante connue de l'homme du métier. L'homme du métier saura, à la lumière de la description et des exemples de réalisation qui suivent, ajuster la quantité de plastifiant en fonction de l'élastomère TPE utilisé (comme indiqué précédemment) ; des conditions particulières d'usage du pneumatique muni de la sous-couche, et notamment en fonction de l'objet pneumatique dans lequel elle est destinée à être utilisée. Lorsque la composition en comprend, on préfère que le taux de plastifiant varie de 0 à 80 pce, plus préférentiellement de 0 à 50 pce, plus préférentiellement encore de 0 à 30 pce, et notamment moins de 10 pce, selon la Tg et le module visés pour la sous-couche. Selon une variante préférentielle de l'invention, la composition de la sous-couche ne contient pas de plastifiant.

Outre les élastomères précédemment décrits, la composition de la sous-couche peut aussi comporter, toujours selon une fraction pondérale minoritaire par rapport à l'élastomère blocs, des polymères autres que des élastomères, tels que par exemple des polymères thermoplastiques. Lorsqu'ils sont présents dans la composition, on préfère que le taux total de polymères thermoplastiques non élastomériques soit inférieur à 40 pce, préférentiellement compris entre 5 et 30 pce, et plus préférentiellement compris entre 10 et 25 pce. Ces polymères thermoplastiques peuvent être notamment les polymères de poly(para-phénylène éther) (noté en abrégé "PPE"). Ces polymères thermoplastiques PPE sont bien connus de l'homme du métier, ce sont des résines solides à température ambiante (20°C) compatibles avec les polymères styréniques, qui ont notamment utilisées pour augmenter la Tg d'élastomères TPE dont le bloc thermoplastique est un bloc styrénique (voir par exemple *"*Thermal, Mechanical and Morphological Analyses of Poly(2,6-dimethyl-1,4-phenylene oxide)/Styrene-Butadiene-Styrene Blends", Tucker, Barlow and Paul, Macromolecules, 1988, 21, 1678-1685).

### 2. Préparation

Les élastomères CBPA peuvent être mis en oeuvre de façon usuelle pour des TPE, par extrusion ou moulage, par exemple à partir d'une matière première disponible sous la forme de billes ou de granulés.

La sous-couche pour le pneumatique selon l'invention est préparée de façon usuelle, par exemple, par incorporation des différents composants dans une extrudeuse bivis, de façon à réaliser la fusion de la matrice et une incorporation de tous les ingrédients, puis utilisation d'une filière permettant de réaliser le profilé à l'épaisseur souhaitée.

Cette sous-couche peut-être montée sur un pneumatique de manière usuelle, ledit pneumatique comprenant en plus de la sous-couche nécessaire pour les besoins de l'invention, une bande de roulement, un sommet et une armature de sommet, et préférentiellement, deux flancs et deux bourrelets, et une armature de carcasse ancrée aux deux bourrelets et s'étendant d'un flanc à l'autre.

### EXEMPLES DE RÉALISATION DE L'INVENTION

Des compositions de sous-couche pour pneumatique selon l'invention ont été préparées comme indiqué précédemment.

Des pneumatiques ont ensuite été préparés selon les méthodes habituelles, avec les constituants connus de l'homme du métier : une bande de roulement, une sous-couche, un sommet, deux flancs et deux bourrelets, une armature de carcasse ancrée aux deux bourrelets, et une armature de sommet, la sous-couche étant celle décrite pour les besoins de la présente invention.

Les propriétés des pneumatiques selon l'invention peuvent être évaluées par des tests effectués sur des pneumatiques ou à partir de tests sur des échantillons de composition de sous-couche et de bande de roulement comme indiqué ci-après.

### Tests de pelage

Les exemples de sous-couche de l'invention sont testés quant à leur adhésion à une couche diénique telle qu'une bande de roulement selon un test dit de pelage.

Les éprouvettes de pelage sont réalisées par mise en contact des couches suivante du stratifié : couche diénique / sous couche (ou couche CBPA) / couche diénique, chacune des couches diénique étant renforcée par un tissu (de façon à limiter la déformation desdites couches sous traction). Une amorce de rupture est insérée entre les la couche CBPA et une des couches diéniques adjacente.

L'éprouvette de stratifié une fois assemblée est portée à 180°C sous pression pendant 10 minutes. Des bandes de 30 mm de largeur ont été découpées au massicot. Les deux côtés de l'amorce de rupture ont été ensuite placées dans les mors d'un machine de traction de marque Intron®. Les essais sont réalisés à température ambiante et à une vitesse de traction de 100 mm/min. On enregistre les efforts de traction et on norme ceux-ci par la largeur de l'éprouvette. On obtient une courbe de force par unité de largeur (en N/mm) en fonction du déplacement de traverse mobile de la machine de traction (entre 0 et 200 mm). La valeur d'adhésion retenue correspond à l'initiation de la rupture au sein de l'éprouvette et donc à la valeur maximale de cette courbe. Les performances des exemples sont normées par rapport au témoin exempt de la couche CBPA (base 100).

### Propriétés dynamiques

Les propriétés dynamiques G* et tan(δ)max sont mesurées sur un viscoanalyseur (Metravib V A4000), selon la norme ASTM D 5992 - 96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349 - 99. On effectue un balayage en amplitude de déformation crête à crête de 0,1 à 50% (cycle aller), puis de 50% à 1 % (cycle retour). Les résultats exploités sont le module complexe de cisaillement dynamique (G*) et le facteur de perte (tan δ). Pour le cycle retour, on indique la valeur maximale de tan δ observée (tan(δ)ₘₐₓ), ainsi que l'écart de module complexe (ΔG*) entre les valeurs à 0,1% et à 50% de déformation (effet Payne). Pour plus de lisibilité les résultats seront indiqués en base 100, la valeur 100 étant attribuée au témoin. Un résultat inférieur à 100 indiquant une diminution de la performance concernée, et inversement, un résultat supérieur à 100, indiquera une augmentation de la performance concernée.

### EXEMPLES

Dans un premier temps, des sous-couches de pneumatiques conformes à l'invention ont été préparées comme indiqué précédemment et comparées à une sous-couche de pneumatique témoin, usuelle préparée selon une méthode usuelle connue de l'homme de l'art. Les compositions de sous-couche sont présentées dans le tableau 1 ci-dessous.

**Tableau 1**

| Composition n° | A-1 | A-2 | A-3 | A-4 | A-5 | A-6 |
|---|---|---|---|---|---|---|
| Caoutchouc naturel (1) | 60 | 0 | 0 | 0 | 0 | 0 |
| BR(2) | 40 | 0 | 0 | 0 | 0 | 0 |
| TPE 1 (3) | 0 | 100 | 0 | 0 | 0 | 0 |
| CBPA 1 (4) | 0 | 0 | 100 | 0 | 0 | 0 |
| CBPA 2 (5) | 0 | 0 | 0 | 100 | 0 | 0 |
| CBPA 3 (6) | 0 | 0 | 0 | 0 | 100 | 0 |
| CBPA 4 (7) | 0 | 0 | 0 | 0 | 0 | 100 |
| PPE (8) | 0 | 15 | 0 | 0 | 0 | 0 |
| Noir de carbone (9) | 60 | 0 | 0 | 0 | 0 | 0 |
| Agent anti-oxydant (10) | 1.5 | 0 | 0 | 0 | 0 | 0 |
| ZnO (11) | 3 | 0 | 0 | 0 | 0 | 0 |
| Acide stéarique(12) | 0,5 | 0 | 0 | 0 | 0 | 0 |
| CBS (13) | 1,5 | 0 | 0 | 0 | 0 | 0 |
| Soufre | 2,5 | 0 | 0 | 0 | 0 | 0 |

| | | | | | | |
|---|---|---|---|---|---|---|
| (1) Caoutchouc naturel peptisé ; (2) BR avec 4,3% de 1-2; 2,7% de trans ; 93% de cis 1-4 ; (Tg = -106°C) (3) Elastomère thermoplastique SBS linéaire « Europrene SOLT 166 » de la société Polimeri Europa ; (4) Elastomère thermoplastique COPE « Pelprène P30B » de la société Toyobo ; (5) Elastomère thermoplastique COPE « Pelprène P40B » de la société Toyobo ; (6) Elastomère thermoplastique COPE « Pelprène P40H » de la société Toyobo ; (7) Elastomère thermoplastique COPE « Pelprène P55B » de la société Toyobo ; (8) Poly(2,6-dimethyl-1,4-phenylene ether) SABIC Noryl SA120 ; (9) Noir de carbone N683 ; (10) N-1,3-diméthylbutyl-N-phénylparaphénylènediamine (« Santoflex 6-PPD » de la société Flexsys) ; (11) oxyde de zinc (grade industriel - société Umicore) ; (12) stéarine (« Pristerene » de la société Uniquema); (13) N-cyclohexyl-2-benzothiazyl-sulfénamide (« Santocure CBS » de la société Flexsys). | | | | | | |

La composition A-1 est une composition usuelle de sous-couche, constituant ici le témoin diénique, tandis que la composition A-2 correspond à une composition de sous-couche avec des élastomères thermoplastiques autres que les élastomères CBPA. Les compositions A3 à A6 sont des compositions de sous-couche pour les pneumatiques selon l'invention.

Le tableau 2 ci-dessous présente les propriétés des compositions A1 à A6, en termes de rigidité et d'hystérèse.

**Tableau 2**

| Composition N°: | A-1 | A-2 | A-3 | A-4 | A-5 | A-6 |
|---|---|---|---|---|---|---|
| Rigidité G*10% à 40°C (base 100) | 100 | 202 | 183 | 198 | 539 | 1096 |
| Hystérèse Tan(delta) max (base 100) | 100 | 34 | 151 | 244 | 161 | 234 |

Comparé au témoin A1, le témoin A2 (constitué d'une sous-couche comprenant un élastomère thermoplastique autre que CBPA) montre que le gain constaté en rigidité s'accompagne en contrepartie d'une diminution de la performance hystérèse alors que les compositions conforment à l'invention (A3 à A6) permettent d'améliorer simultanément la performance rigidité et hystérèse.

Les performances de l'invention ont ensuite été évaluées en termes d'adhésion de la sous-couche à une couche diénique telle qu'une bande de roulement. A cette fin, les compositions A-1 à A-3 ont été testées selon le test de pelage précédemment décrit, associées à une composition B présentée dans le tableau 3 ci-dessous, pour former les stratifiés A-1/B, A-2/B et A-3/B. Les résultats sont présentés dans le tableau 4 ci-après.

Les résultats présentés au tableau 4 mettent en évidence que la sous-couche du pneumatique selon l'invention permet une adhésion de la sous-couche à un mélange diénique excellente, et très améliorée par rapport à celle d'une sous-couche usuelle ou d'une sous-couche comportant un TPE autre que CBPA.

**Tableau 3**

| Composition | B |
|---|---|
| BR (1) | 15 |
| SBR (2) | 85 |
| Noir de carbone (3) | 5 |
| Silice (4) | 70 |
| Agent de couplage (5) | 6 |
| Résine (6) | 15 |
| Huile (7) | 2 |
| Cire anti-ozone | 2 |
| Anti-oxydant (8) | 2 |
| Acide stéarique (9) | 2 |
| CBS (10) | 2 |
| DPG (11) | 1,5 |
| Soufre | 1 |
| ZnO (12) | 0,5 |

| | |
|---|---|
| (1) BR avec 0,5% de 1-2 ; 1,2% de trans ; 98,3% de cis 1-4 (Tg = - 108°C) (2) SBR solution avec 26.5% de styrène, 24 % de motifs polybutadiène 1-2 et 50% de motifs polybutadiène 1-4 trans (Tg = -48°C) (3) Noir de carbone N234 (4) Silice « Zeosil 1165MP » de la société Rhodia (5) agent de couplage TESTP « Si69 » de la société Evonik-Degussa (6) Résine C5/C9 «Escorez ECR-373» de société EXXON (7) Huile MES « Catenex SNR » de la société Shell (8) N-1,3-diméthylbutyl-N-phénylparaphénylènediamine «Santoflex 6-PPD» de la société Flexsys (9) Stéarine "Pristerene" de la société Uniquema (10) N-cyclohexyl-2-benzothiazyl-sulfénamide « Santocure CBS » de la société Flexsys (11) Diphénylguanidine « Perkacit DPG » de la société Flexsys (12) Oxyde de zinc de grade industriel de la société Umicore | |

**Tableau 4**

| Stratifié N°: | A-1/B | A-2/B | A-3/B |
|---|---|---|---|
| Formulation de la sous-couche | A-1 | A-2 | A-4 |
| Perforrmance Adhésion % | 100 | 100 | 191 |

## Revendications

1. Pneumatique radial (1) pour véhicule automobile, comportant :
o un sommet (2) comportant une bande de roulement (3) pourvue d'au moins une partie (3a) radialement externe destinée à entrer au contact de la route ;
o deux bourrelets inextensibles (4), deux flancs (5) reliant les bourrelets (4) à la bande de roulement (3), une armature de carcasse (6) passant dans les deux flancs (5) et ancrée dans les bourrelets (4) ;
o une armature de sommet ou ceinture (7) disposée circonférentiellement entre la partie (3a) radialement externe de la bande de roulement (3) et l'armature de carcasse (6) ;
o une couche élastomère radialement interne (8), dite « sous-couche », de formulation différente de la formulation de la partie radialement externe (3a) de la bande de roulement, cette sous-couche étant elle-même disposée circonférentiellement entre la partie (3a) radialement externe de la bande de roulement (3) et l'armature de sommet (7),
**caractérisé en ce que** ladite sous-couche comprend au moins un élastomère thermoplastique copolymère à bloc polyester aromatique (CBPA) à un taux compris dans un domaine variant de 65 à 100 pce (parties en poids pour cent parties d'élastomère).

2. Pneumatique selon la revendication 1, dans lequel le bloc élastomérique de l'élastomère thermoplastique copolymère à bloc polyester aromatique (CBPA) est choisi dans le groupe constitué par les polyéthers, les polyesters aliphatiques, les polycarbonates et les mélanges de ces derniers.

3. Pneumatique selon la revendication 2, dans lequel l'élastomère thermoplastique copolymère à bloc polyester aromatique (CBPA) est choisi dans le groupe constitué par les copolymères de polyester aromatique et de polyéther et les mélanges de ces derniers.

4. Pneumatique selon la revendication 3, dans lequel l'élastomère thermoplastique copolymère à bloc polyester aromatique (CBPA) est choisi dans le groupe constitué par les copolymères de polyester aromatique et de polyéther aliphatique et les mélanges de ces derniers.

5. Pneumatique selon l'une des revendications précédentes, dans lequel la masse moléculaire moyenne en nombre du CBPA est préférentiellement comprise entre 15 000 et 500 000 g/mol.

6. Pneumatique selon l'une des revendications précédentes, dans lequel l'élastomère thermoplastique copolymère à bloc polyester aromatique (CBPA) présente une température de transition vitreuse ("Tg") qui est inférieure ou égale à 25°C, plus préférentiellement inférieure ou égale à 10°C.

7. Pneumatique selon l'une quelconque des revendications précédentes, dans lequel la température de fusion (Tf) du copolymère CBPA est comprise entre 140°C et 210°C.

8. Pneumatique selon l'une quelconque des revendications précédentes, dans lequel le taux de copolymère CBPA dans la sous-couche est compris dans un domaine allant de 70 à 100 pce, de préférence de 75 à 100 pce.

9. Pneumatique selon la revendication 6, dans lequel le taux de copolymère CBPA dans la composition de la sous-couche est compris dans un domaine allant de 95 à 100 pce.

10. Pneumatique selon l'une quelconque des revendications 1 à 5, dans lequel la sous-couche comprend en outre un élastomère différent d'un élastomère CBPA à un taux d'au plus 35 pce.

11. Pneumatique selon l'une quelconque des revendications 1 à 6 ou 8, dans lequel la sous-couche comprend en outre un élastomère différent d'un élastomère CBPA à un taux d'au plus 30 pce, de préférence d'au plus 25 pce.

12. Pneumatique selon l'une quelconque des revendications 1 à 9, dans lequel la sous-couche comprend en outre un élastomère différent d'un élastomère CBPA à un taux d'au plus 5 pce.

13. Pneumatique selon l'une quelconque des revendications précédentes, dans lequel l'élastomère CBPA est le seul élastomère de la sous-couche.

## Patentansprüche

1. Radialreifen (1) für Kraftfahrzeug, aufweisend:
• ein Oberteil (2), das eine Lauffläche (3) aufweist, die mit mindestens einem radial äußeren Abschnitt (3a) versehen ist, der mit der Straße in Berührung kommen soll;
• zwei undehnbare Wülste (4), zwei Seitenwände (5), die die Wülste (4) mit der Lauffläche (3) verbinden, wobei eine Karkassenverstärkung (6) in den beiden Seitenwänden (5) verläuft und in den Wülsten (4) verankert ist;
• eine Oberteilverstärkung oder ein Gürtel (7), die bzw. der in Umfangsrichtung zwischen dem radial äußeren Abschnitt (3a) der Lauffläche (3) und der Karkassenverstärkung (6) angeordnet ist;
• eine als "Basisschicht" bezeichnete radial innere Elastomerschicht (8) mit einer anderen Formulierung als der Formulierung des radial äußeren Abschnitts (3a) der Lauffläche, wobei diese Basisschicht selbst in Umfangsrichtung zwischen dem radial äußeren Abschnitt (3a) der Lauffläche (3) und der Oberteilverstärkung (7) angeordnet ist,
**dadurch gekennzeichnet, dass** die Basisschicht mindestens ein thermoplastisches Copolymer-Elastomer mit aromatischem Polyesterblock (CAPB) mit einem Anteil in einem Bereich von 65 bis 100 pce (Gewichtsteile auf einhundert Teile Elastomer) umfasst.

2. Reifen nach Anspruch 1, wobei der Elastomerblock des thermoplastischen Copolymer-Elastomers mit aromatischem Polyesterblock (CAPB) aus der Gruppe gebildet aus Polyethern, aliphatischen Polyestern, Polycarbonaten und Mischungen dieser letzteren ausgewählt ist.

3. Reifen nach Anspruch 2, wobei das thermoplastische Copolymer-Elastomer mit aromatischem Polyesterblock (CAPB) aus der Gruppe gebildet aus Copolymeren aus aromatischem Polyester und Polyether und Mischungen dieser letzteren ausgewählt ist.

4. Reifen nach Anspruch 3, wobei das thermoplastische Copolymer-Elastomer mit aromatischem Polyesterblock (CAPB) aus der Gruppe gebildet aus Copolymeren aus aromatischem Polyester und aliphatischem Polyether und Mischungen dieser letzteren ausgewählt ist.

5. Reifen nach einem der vorhergehenden Ansprüche, wobei die zahlengemittelte Molmasse des CAPB vorzugsweise zwischen 15 000 und 500 000 g/mol liegt.

6. Reifen nach einem der vorhergehenden Ansprüche, wobei das thermoplastische Copolymer-Elastomer mit aromatischem Polyesterblock (CAPB) eine Glasübergangstemperatur ("Tg") von unter oder gleich 25°C, bevorzugter unter oder gleich 10°C aufweist.

7. Reifen nach einem der vorhergehenden Ansprüche, wobei die Schmelztemperatur (Tf) des Copolymers CAPB zwischen 140°C und 210°C liegt.

8. Reifen nach einem der vorhergehenden Ansprüche, wobei der Anteil des Copolymers CAPB in der Basisschicht in einem Bereich von 70 bis 100 pce, vorzugsweise von 75 bis 100 pce liegt.

9. Reifen nach Anspruch 6, wobei der Anteil des Copolymers CAPB in der Zusammensetzung der Basisschicht in einem Bereich von 95 bis 100 pce liegt.

10. Reifen nach einem der vorhergehenden Ansprüche 1 bis 5, wobei die Basisschicht ferner ein Elastomer, das sich von einem CAPB-Elastomer unterscheidet, mit einem Anteil von höchstens 35 pce umfasst.

11. Reifen nach einem der vorhergehenden Ansprüche 1 bis 6 oder 8, wobei die Basisschicht ferner ein Elastomer, das sich von einem CAPB-Elastomer unterscheidet, mit einem Anteil von höchstens 30 pce, vorzugsweise höchstens 25 pce umfasst.

12. Reifen nach einem der vorhergehenden Ansprüche 1 bis 9, wobei die Basisschicht ferner ein Elastomer, das sich von einem CAPB-Elastomer unterscheidet, mit einem Anteil von höchstens 5 pce umfasst.

13. Reifen nach einem der vorhergehenden Ansprüche, wobei das CAPB-Elastomer das einzige Elastomer der Basisschicht ist.

## Claims

1. Radial tyre (1) for a motor vehicle, comprising:
∘ a crown (2) comprising a tread (3) provided with at least a radially outer part (3a) intended to come into contact with the road;
∘ two non-stretchable beads (4), two sidewalls (5) connecting the beads (4) to the tread (3), a carcass reinforcement (6) passing into the two sidewalls (5) and anchored in the beads (4) ;
∘ a crown reinforcement or belt (7) positioned circumferentially between the radially outer part (3a) of the tread (3) and the carcass reinforcement (6);
∘ a radially inner elastomer layer (8), referred to as "underlayer", having a formulation different from the formulation of the radially outer part (3a) of the tread, this underlayer being itself positioned circumferentially between the radially outer part (3a) of the tread (3) and the crown reinforcement (7), **characterized in that** the said underlayer comprises at least one aromatic polyester block copolymer (APBC) thermoplastic elastomer at a content within a range varying from 65 to 100 phr (parts by weight per hundred parts of elastomer).

2. Tyre according to Claim 1, wherein the elastomeric block of the aromatic polyester block copolymer (APBC) thermoplastic elastomer is selected from the group consisting of polyethers, aliphatic polyesters, polycarbonates and the mixtures of these.

3. Tyre according to Claim 2, wherein the aromatic polyester block copolymer (APBC) thermoplastic elastomer is selected from the group consisting of copolymers of aromatic polyester and of polyether and the mixtures of these.

4. Tyre according to Claim 3, wherein the aromatic polyester block copolymer (APBC) thermoplastic elastomer is selected from the group consisting of copolymers of aromatic polyester and of aliphatic polyether and the mixtures of these.

5. Tyre according to one of the preceding claims, wherein the number-average molecular weight of the APBC is preferably between 15 000 and 500 000 g/mol.

6. Tyre according to one of the preceding claims, wherein the aromatic polyester block copolymer (APBC) thermoplastic elastomer exhibits a glass transition temperature ("Tg") which is less than or equal to 25°C, more preferably less than or equal to 10°C.

7. Tyre according to any one of the preceding claims, wherein the melting point (M.p.) of the APBC copolymer is between 140°C and 210°C.

8. Tyre according to any one of the preceding claims, wherein the content of APBC copolymer in the underlayer is within a range extending from 70 to 100 phr, preferably from 75 to 100 phr.

9. Tyre according to Claim 6, wherein the content of APBC copolymer in the composition of the underlayer is within a range extending from 95 to 100 phr.

10. Tyre according to any one of Claims 1 to 5, wherein the underlayer additionally comprises an elastomer other than an APBC elastomer at a content of at most 35 phr.

11. Tyre according to any one of Claims 1 to 6 or 8, wherein the underlayer additionally comprises an elastomer other than an APBC elastomer at a content of at most 30 phr, preferably of at most 25 phr.

12. Tyre according to any one of Claims 1 to 9, wherein the underlayer additionally comprises an elastomer other than an APBC elastomer at a content of at most 5 phr.

13. Tyre according to any one of the preceding claims, wherein the APBC elastomer is the only elastomer of the underlayer.
